# EUROPEAN PATENT SPECIFICATION

(11) **EP 3 570 234 B1**
(45) Date of publication and mention of the grant of the patent: **03.04.2024**
(21) Application number: 19174311.1
(22) Date of filing: 14.05.2019
(51) Int. Cl.: G06Q 20/00, G06Q 20/20, G06Q 20/34, G07G 1/00

(54) **UNIVERSAL PLUG & PLAY DRIVER FOR AUTOMATED PAYMENT SYSTEMS AND AUTOMATED PURCHASE SYSTEM PROVIDED WITH SUCH A DRIVER**
UNIVERSALLER PLUG & PLAY-TREIBER FÜR AUTOMATISIERTE ZAHLUNGSSYSTEME UND AUTOMATISIERTES KAUFSYSTEM MIT EINEM SOLCHEN TREIBER
PILOTE UNIVERSEL PLUG & PLAY POUR SYSTÈMES DE PAIEMENT AUTOMATIQUE ET SYSTÈME D'ACHAT AUTOMATIQUE EQUIPÉ D'UN TEL PILOTE

(30) Priority: 16.05.2018 IT 201800005421
(43) Date of publication of application: 20.11.2019
(73) Proprietor: Berardi, Stelvio, 47922 Rimini (RN) (IT); Tarsina, Alexandru, 47822 Poggio Torriana (RN) (IT)
(72) Inventor: BERARDI, Stelvio, 47922 Rimini (RN) (IT); TARDINA, Alexandru, 47822 Poggio Torriana (RN) (IT)
(74) Representative: Karaghiosoff, Giorgio Alessandro

(56) References cited:
- EP-B1- 0 832 473
- WO-A1-96/38821
- CN-A- 105 678 302
- US-A1- 2007 235 523
- US-A1- 2014 222 545
- US-A1- 2015 186 857
- US-A1- 2017 076 260

## Description

The present invention relates to a universal plug & play driver for interfacing a cash register system with an automated payment system in combination with a cash register.

In addition the present invention also relates to an automated purchase system provided with such a driver.

Document US2017/0076260 describes a payment system that acquires and displays the operator image. The system described in this document involves the presence of a camera, whose only object is to acquire the operator image and to add it in a predefined area on the screen on which the transaction is also represented or the list of items is generated and the amount composed of the cost of every single item is calculated.

The system does not provides a driver or a software hardware unit acting as interface between a cash register managing software and a control software of a payment unit whether the latter is by cash or electronic payment.

An additional document WO96/38821 (EP832473) describes a method for interchanging information between a cash register and a payment processing device.

Similarly to what stated above for the preceding document, in this case also the software natively manages and controls both the cash register and the payment processing device.

Object of the present invention is to make a driver and a plug and play system for the integration among all types of cash register software carrying out functions of selecting or recognizing items, identifying cost and calculating and indicating overall costs for the set of items selected or recognized with the systems intended for the automated payment functionalities with whom the overall amount calculated by the cash register is transferred both in form of cash and in form of withdraw from payment cards to the organization selling the items.

Nowadays, the commercial companies purchasing these types of automated payment systems, face a number of operation challenges due to the interfacing among the software of their cash register and the automated payment drawer, specifically the communication protocol of their cash register software communicates data to the drawer differently of the way designed by the several automated payment drawer manufacturers.

The invention aims to compensate for this type of challenge. The aim of the invention is indeed to ensure that one's own cash register, of any brand and model and with any type of pre-installed cash program with any type of automated payment drawer, can be connected very quickly for example in a few minutes, by making the automated payment drawer perfectly operative for the realization purpose.

In the present invention with the term automated payment drawer is meant any type of device adapted to carry out economic transactions. Among these, alternatively or in combination, cash collecting and delivering devices can be provided comprising mechanical members which, on one hand, withdraw cash deposited by a buyer, recognize the value thereof and verify that the sum of the deposited values complies with the overall sum of the amount to be paid and transfer the collected money to a protected collecting chamber and, on the other hand, calculate the possible amount of change resulting from an over-payment and deliver cash corresponding to the calculated change to a withdrawal station accessible to the buyer that has paid.

Alternatively or in combination, the automated payment drawer can provide payment card readers such as credit cards, ATM cards or other similar cards, such as for example cards in which a determined amount of credit is loaded from which the amount to be paid is taken off, the new balance being stored in the card memory.

The invention provides a plug and play driver for interfacing a cash register system with an automated payment system in combination with a cash register comprising the combination of features according to claim 1.

Claims 2 to 6 relates to further features of the said plug and play driver for interfacing a cash register system with an automated payment system in combination with said cash register.

According to an embodiment, the invention provides a plug and play driver for interfacing a cash register system with an automated payment system in combination with the said cash register providing an interface for inputting identifiers of different typologies of items and for displaying said item typologies and the related costs, a processor for storing and adding the amounts of said cost related to each identified item and a display for displaying at least said overall amount being a sum of the said costs related to each identified item;
the automated payment system providing at least one economic transaction unit by at least a cash collection and/or by charging a payment card, which transaction unit is activated upon determining said overall amount calculated by the cash register,
said plug and play driver consisting of an interfacing unit for the interface between cash register software and automated payment system software said interface identifying a display area of the overall amount on said display and for reading said overall amount and identifying a command of at least one control key of said cash register,
said plug and play driver further comprising a communication interface for communicating to the automated payment system said overall amount and an intercepting interface to intercept said command of said control key, for associating said command generated by said control key, at a first activation thereof, with a function for activating the automated payment system, immediately after the computation of said overall amount the transmission of said overall amount to the automated payment system, and for readdressing the command generated by said control key to the cash register system for carrying out a function provided by the control key of the cash register.

According to a further characteristic, the said control key of the cash register consists of a control key for issuing a receipt, the plug & play driver generating an interface communicating with the automated payment system which gives to said control key for issuing the receipt a first function for activating the automated payment system at the first activation of said control key and resets the command for issuing the receipt at a subsequent second activation of said control key.

According to an enhancement embodiment, the command for issuing a receipt by the cash register is automatically generated by the automated payment system at the end of the payment process and it is directly transmitted to the cash register by the automated payment system by simulating an activation of the control key for issuing the receipt.

According to yet an advantageous embodiment, the said plug & play driver has a selecting unit to select the said display area of the overall amount, a section for capturing the image of the alphanumerical characters that are in said area and for recognizing said alphanumerical characters to generate the data related to the overall amount object of the payment, which data is input to the automated payment system as a value of the transaction to be carried out.

Still according to an embodiment variation, the plug & play driver provides a unit for identifying and recognizing said control key for issuing the receipt, for intercepting the command signal generated by said control key and for addressing said command signal generated by said control key as a command signal for driving the automated payment system, whereas the command signal of said control key for issuing the receipt is inhibited and replaced by an automated command generated by the plug & play driver upon receipt of a signal generated by the automated payment system.

The invention also relates to an automated purchase system comprising
a cash register and an automated payment system wherein said cash register and said automated payment system are interfaced by a plug and play driver according to one of the previously disclosed embodiments and variants.

The advantages of the driver and the system using the same according to the afore described embodiments of the invention are apparent.

Specifically the customer, once the automated payment drawer has been connected, with the appropriate cables provided by the manufacturer, and the driver has been started, will see a new program window popping up on the screen of his own cash register, in which the instructions are displayed to guide the user to the system setup and in a few minutes his own cash register and/or his own cash program will be interfaced with the automatic payment drawer without the involvement of software house and IT experts. What afore said will result in a remarkable advantage both economically and practically for the final user, which will avoid involving software houses which, sometimes, do not provide automatic payment drawer interfacing services.

The features of the invention and the advantages of the present invention will be more evident from the following description of exemplary embodiments illustrated in the accompanying drawings wherein:
fig. 1 shows a simplified block diagram of an automated purchase system providing the use of a plug & play driver according to the present invention, the individual blocks being functional blocks and related to combinations of hardware and software executed by said hardware.
Fig. 2 shows a more detailed block diagram of the plug & play driver for functionally interfacing a cash register system with an automated payment system or device.
Fig. 3 shows a flowchart of the process for interfacing a cash register system with an automated payment system for generating an item and/or service automated purchase system.
Figure 4 shows a touch screen type user interface window of an example of an automated purchase system operating according to the present invention.
Figures 5 to 20 show an example of the driver activation and configuration process according to the present invention for interfacing a digital type cash register and an associated payment transaction processing system that provides different alternatives of payment systems such as cash, or electronic payment.

The exemplary embodiments described in the following should not be taken as a limitation of the protection scope, but only as examples of actuation modes of the inventive teaching. Specifically the block diagrams are functional diagrams generally illustrating operative units with reference to their function and that can consist of hardware only in which a firmware is fixedly implemented or of a combination of hardware generally able to execute a code and thus provided with a processor and usual peripheral devices combined with the same, such as data and control input means, display means, memories and interfaces for communicating with other units according to one or more different communication protocols currently present in the state of the art.

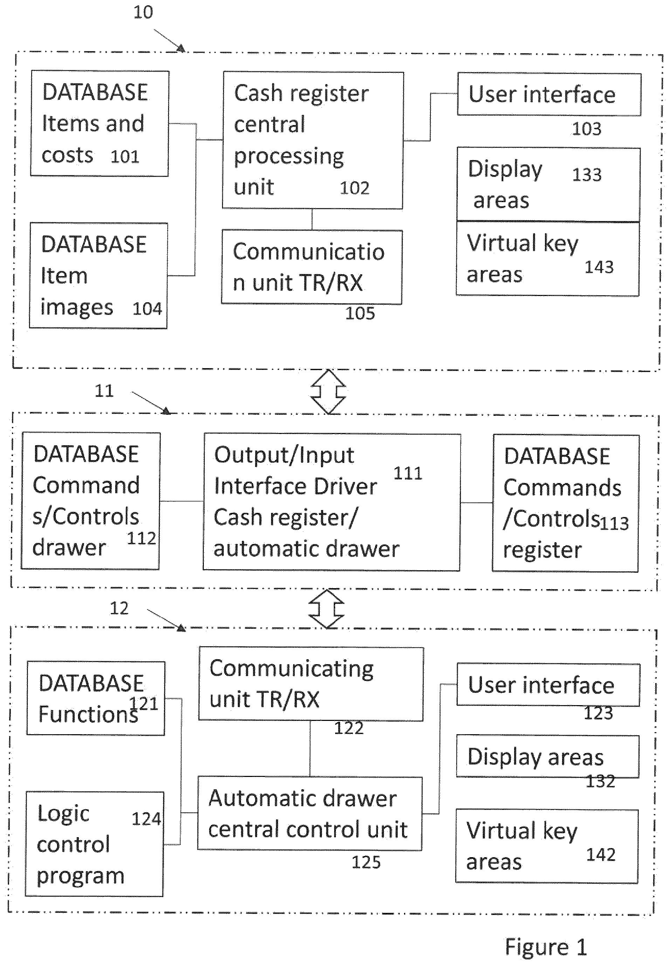

In figure 1 a first embodiment is shown, wherein with 10 a cash register system is denoted of the type consisting of a code containing the instructions for carrying out the usual functions of the cash register and hardware wherein said software is stored and that is setup by the same in order to carry out the cash register functions. An elaborating unit 102 is intended for loading in its working memory said software and executing the same. To the same a user interface unit 103 is connected and has a display screen on which areas 133 are shown for displaying the typical information of a cash register and one or more areas related to virtual keys 143 for inputting data or commands. The data or command input can occur by point and click devices, such as mouses or the like or thanks to the touch functionalities of a touch screen. An alternative can provide easy access for differently disabled people, such as for example by offering a voice type interface. This can simply be the translation into voice information and voice controls of the functions occurring on the screen relative to the displaying and data or control input functions.

In the typical base function of a cash register, the same typically has a database containing records related to the different typologies of items and the related costs as denoted by 101. In the most advanced release, each item can be given a screen image, which is stored in an image database 104.

A device for recognizing the individual items, by means for example of bar code readers and/or by reading electronic tags associated to the items, such as for example RFID tags or by selecting the item from a list shown on the video terminal and confirming the item with a point and click device allows the list of purchased items to be input in the cash register system and the cash register provides to identify the cost thereof and to calculate the sum for determining the overall amount the buyer has to pay. Such a value is shown in a predetermined area of the display screen. Furthermore, above the area displaying the overall amount, correspondingly tabulated unitary costs of the individual items can also be provided flanked by the description indications of the item typology and possibly the amounts.

Functional keys such as a key for manually inputting data, typically adjuncts to the purchase, such as bags or the like, coupons or the like and for issuing the receipt listing the purchased items, the number of pieces, the unitary cost and the overall sum to be paid are also provided.

A communication unit 105 for receiving and transmitting data and/or commands allows connecting the cash register system 10 to other units required for finalizing the purchase.

With 12 an automated payment device or system is denoted, comprising in alternative or in combination different typologies of automated payment devices. These can consist of members for depositing and/or collecting cash both in form of coins and notes and providing for recognizing, validating and counting the overall amount deposited or collected, as well as for conveying cash in properly protected depots. Alternatively electronic payment means can be provided, such as charging on payment cards and which comprise readers of authentication codes of said cards and units for connecting with the companies managing the payment cards or electronic payment systems. As a general rule, the automated payment device or system 12 according to the example depicted also comprises a control logic unit 125 for controlling the functionalities the different transaction devices should have. The unit 125 executes a logic program 124 for controlling the transaction devices of which herein above two examples have been listed and whose functions are coded in a function database 121 containing the setup and configuration information of the related logic control program in relation to the status signals and the controls to be exchanged with the hardware or software hardware units of the transaction devices. A user interface unit 123 allows the user operation and/or using guide information to be displayed in display areas 132 and data or commands to be input, such as for example selecting the type of payment card, inputting the PIN and other like functions by using real keys or virtual keys 142 for example where there is a touch screen.

A communicating unit 122 of the type adapted to transmit and receive signals allows the automated payment device or system, also called automatic payment drawer, to be connected to other systems such as for example a cash register 10.

In order to overcome the dedicated setups required for the cash register systems to operate correctly with the automated payment systems, typically provided by different companies, the present invention provides a plug & play driver representing a simplified interface system between two not standardized cash register 10 and automated payment 12 systems.

Still in the field of the setup logic, the plug & play interface driver can consist of software only being executed by either one and/or another of the two processors 102, 125 of the systems 10 and 12 of cash register and/or automated payment, or according to an alternative embodiment can also be in the form of a separated operative unit carried out by a dedicated processor.

In figure 1 for the sake of functional and architectural clarity, the driver is depicted as a stand alone functional block denoted by 11. However this choice is only for illustration purpose since it highlights that it is an additional element that, from the point of view of its actuation, can however consist of simple software executed by either one or another or partially by both the systems 10 and 12.

As a general rule the driver 11 comprises a processing unit 111 operating in combination with databases for recognizing commands and controls of the automated payment drawer system 12 and commands and controls of the cash register system 113.

Operatively and in its essential form, the driver 11 provides for the data related to the overall amount to be paid that is calculated by the cash register and that is required in order to validate the economic transaction carried out with the transaction devices present in the automated payment system, to be provided to the automated payment system. In addition the driver provides for generating on the user interface 103 of the cash register system a control key that generates a signal for driving the automated payment system and receiving and transmitting the command input by the activation of this key to the automated payment system as a command driving said automated payment system 12 and the related devices.

The control unit of the automated payment system provides for carrying out a procedure for verifying and validating the collected cash amount and/or the actual electronic payment transaction and generates a validation signal that is received by the driver 11 and converted by the same into a command signal for issuing the receipt, which command signal is provided by the driver 11 to the central unit 102 of the cash register system in order to carry out the receipt printing function according to the modes provided by said system.

When the automated purchase system is first operated, simple setup activities are required for the operation, which provide the connection of the data lines between the cash register system and the automated drawer system, i.e. automated payment and plug & play driver loading. Switching on the systems causes the setup process of the driver 11 to be executed, which process can be different depending on the choices made for the steps for recognizing and withdrawing the data related to the overall amount calculated by the cash register system and choosing and identifying a control member, in particular a control button of the user interface 103 of the cash register system 10 that the driver must intercept and use as a control for driving the automated payment system, as well as the input door of the automatic signal controlling the receipt issuing that the driver must generate and transmit to the cash register system 10 upon receiving or reading the signal validating the transaction by the automated payment system 12.

A preferred choice that overcomes the hardware/software setup challenges for interfacing the cash register software to the automated payment system software and being the preferred exemplary embodiment, provides for the driver 11 to comprise an image capturing unit and a captured image processing unit for recognizing data or information reproduced in the captured images.

Specifically for the collection of the data related to the overall amount, the driver drives the image capturing unit and the user simply selects the display area of said amount on the display screen of the user interface 103 of the cash register system 10. Since this area is fixed such a selection is only made during the initial setup environment and is stored in the driver 11. During the use of the automated purchase system, at the end of the step of recognizing the items and computing the overall amount to be paid, upon the command for driving the automated payment system which will be described herein below, the driver automatically selects the display area of the overall amount on the screen of the cash register system 10 and automatically provides for recognizing the displayed amount by means of the character recognizing unit, by which the data provided is recognized as data related to the overall amount to the automated payment system for carrying out the transaction functions.

Similarly, when advantageously the user interface of the cash register system is of the touch type, the image capture system of the driver 11 allows, in the setup step, the area 133 corresponding to a button and preferably to the button related to the receipt issuing by the cash register system, to be selected and the signals for driving said button to be intercepted. The receipt issuing function is inhibited by the driver 11 which addresses the driving signal of the screen area selected such as the area corresponding to the button for issuing the receipt to the automated payment system as a signal for driving the transaction devices according to the modes provided by the various typologies of payment devices.

Controlling the actual payment occurs by verification of the money deposit of the sum related to the overall amount obtained by the driver 11, as afore described, and/or the charging thereof and the automated payment system generates a transaction validation signal that the driver 11 provides to the cash register system automatically as a signal for issuing the receipt in replacement of the signal generated by the corresponding button that had been inhibited and intercepted for the function of driving the automated payment system.

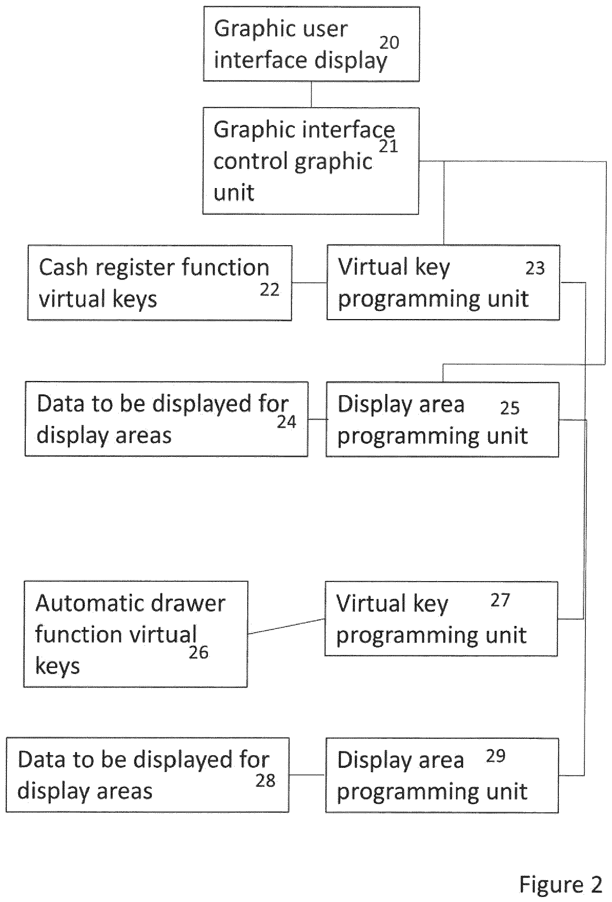

Figure 2 shows a more detailed functional block diagram showing the display of the user interface 20 which is preferably of touch type, which is controlled by a graphic unit 21 of the cash register system. The graphic unit 21 operates in combination with a database of virtual key functions of the cash register denoted by 22 and a programming unit of the display areas of the virtual keys 23.

Similarly according to the example shown, a database of data to be displayed in the display areas denoted by 24 and a unit 25 for programming the display areas on the display 20 are provided. The two programming units 23 and 25 provide the commands and setup data of the user interface to the graphic unit 21 controlling the screen 20. Similarly the activation of graphic functions by selection, point and click or touch of virtual keys is detected by the graphic unit 21 and transmitted to the programming units 23, 25 addressing the information to the central unit for the use thereof according to the functionalities provided by the cash register system 10 and/or the driver 11.

A similar structure is provided for the driver 11 which provides a list of the functions of the automated drawer 26, display data for the automated drawer 28 respectively accessible to a unit for programming virtual keys 27 and to a unit for programming display areas 29. These are interfaced with the corresponding programming units 23 and 24 of the cash register system and allow the implementation of the afore described functions of capturing and recognizing the overall amount and recognizing the area related to the key for issuing the receipt and intercepting the activation thereof, readdressing of the command signal to the automated payment system and inhibiting the issuing command of the cash register and subsequent generating the substitutive automated signal for issuing the receipt upon generating the signal by the automated payment system of actual and correct transaction.

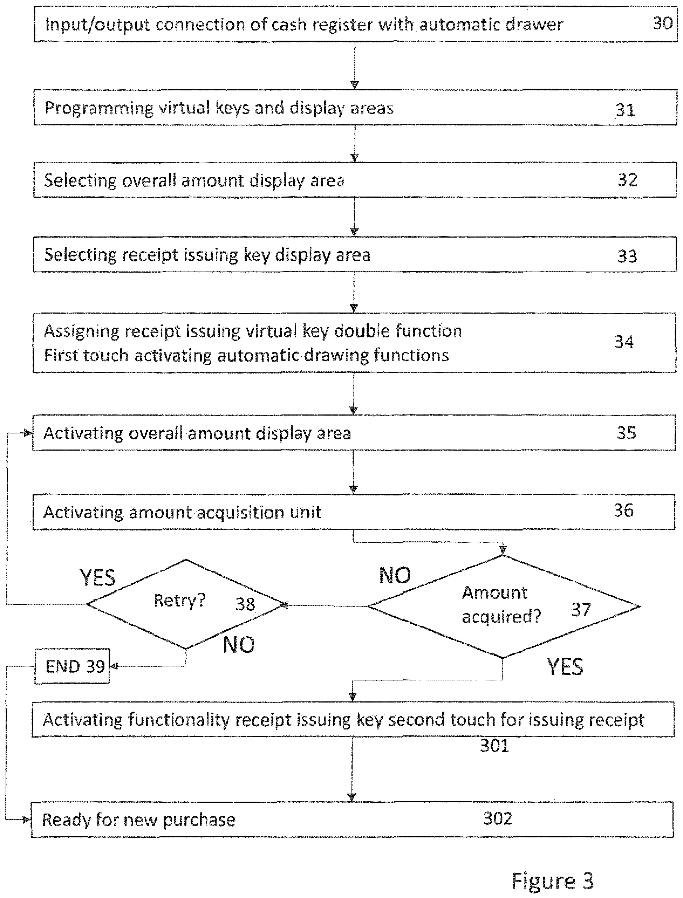

Figure 3 shows a flowchart of an example of the interfacing process between cash register system 10 and automated payment system 12 managed by the plug & play driver 11.

The step 30 provides for the initial hardware connection of the two cash register and automated payment systems 11 and 12. Then the driver setup step starts wherein at step 31, for example by screenshot by image capture software, the areas corresponding to the virtual keys and the display area(s) are programmed.

The step of selecting and identifying said areas denoted by 32 and 33 ends the process for programming the areas which shows the overall amount to be paid and the area related to the control key for issuing the receipt.

At the step 34, according to a possible alternative semi-automated embodiment, which can be easily modified in the automated process afore described, the key for issuing the receipt is associated with two functions each one that can be activated by actuating the key in a sequence of two activations in time sequence to one another.

This alternative provides that the receipt issuing occurs on explicit user command by means of a second activation of the control button for issuing the receipt after signaling the correct payment validation by the automated payment system and can represent an alternative to the automated command functionality of the receipt issuing by the driver replacing this second activation of the control button with the signal validating the correct payment.

The step 35 provides for activating the area displaying the overall amount which allows recognizing the data related to the overall amount and sending the same to the automated payment system in order to carry out the automated payment process according to the modes provided by the automated payment system itself. This is provided at step 36. The steps 37 and 38 provide for carrying out the validation and the consequences related to the actual validation or the missed validation of the correct payment. Firstly the automated payment system verifies that the correct amount has been transferred in the forms selected by the user and provided by the system and possibly it provides for issuing the due change. The process for asking the amount is repeated as long as the overall amount or a higher value has been detected by the automated payment system, as it shows from the combination of steps 37 and 38. If the efforts are without outcome leading to the validation at step 37, the system stops at step 39 and ends the function possibly issuing signals to the service staff and the user.

If the transaction is validated at step 37, the system carries on with the activation of the functionality of issuing the receipt depicted at step 301, which in the specific case occurs by a repetition of the activation of the control button for issuing the receipt but that in the afore described variation can provide the automated transmission of this command by the driver 11.

At the end of the receipt issuing, the automated purchase system is ready for a new cycle as shown at step 302.

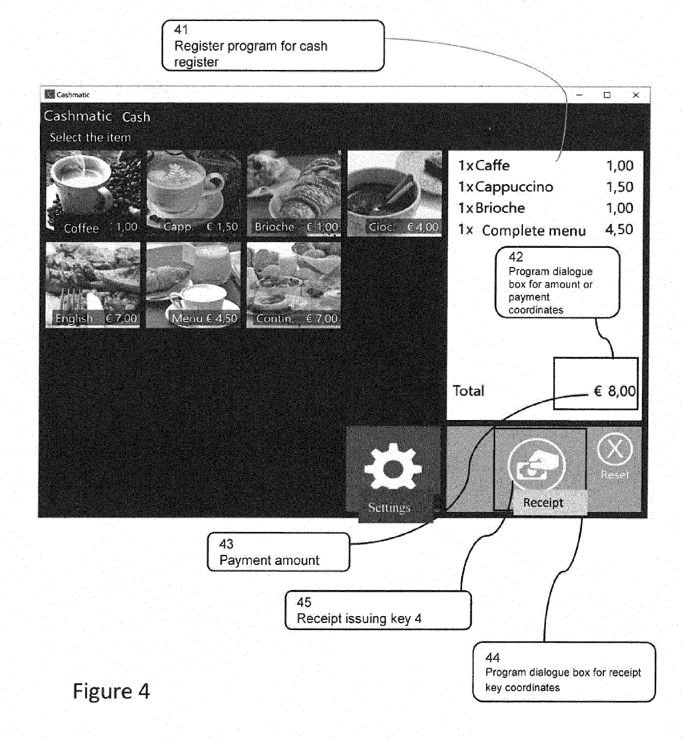

Figure 4 shows a true example of an automated purchase system according to the present invention operating based on the plug & play driver of the present invention.

Fig. 4 shows a perfectly normal cash program, of any type and model which can be found in any model and type of cash register, at the first connection of the automated payment drawer to the cash register, after the application program installation, the window for programming the touch area will appear on the cash register screen.

Figure 4 shows a touch screen of a cash register, the screen display area wherein the list of the recognized items and costs are shown and the progressive sum is carried out is denoted by 41. The adjoining area provides buttons for selecting and choosing the items that are recognized not by the item-related code readers, but by pressing the corresponding buttons showing the image of the same items.

With 42 the window is shown for selecting the driver of the area related to the display of the overall amount calculated and displayed by the cash register, for reading the corresponding data by the driver and thus for providing said data to the automated payment system. The overall amount data is denoted by 43.

With 45 the touch button is denoted for controlling the issuing of the receipt and with 44 the area selected by the driver 11 related to such a button for detecting by the driver 11 the driving of the same button by touch and for intercepting the touch signal and addressing the driving signal to the automated payment system as command signal for driving this system. The concurrent inhibition of the receipt issuing is held as long as the driver detects a signal validating the correct transaction. Upon receiving said signal, the driver 11 replaces the inhibited control with an automated signal for issuing the receipt generated by the driver 11 upon the signal of correct validation.

As it is apparent the simplicity is at its most and after the first setup the driver operates in background without interfering with the normal functionalities of the system.

The driver according to the present invention requires the user to only select the area of the overall purchase amount denoted by 43 and the area of the key for issuing the receipt of its own cash program, denoted by 45. Once such an operation has been carried out the program is perfectly interfaced.

Upon selecting the area for issuing the receipt 45, the driver autonomously creates an invisible filter, on the key for issuing the receipt 45, which has the functionality of intercepting the touch by the operator by inhibiting the native function of receipt print.

Upon pressing the area related to the key for issuing the receipt 45, the automated drawer will activate and the payment window will show up and indicate the amount of the transaction, the amount to be paid into the automated cash and the change being delivered. Once the cash overall income has been certified, the driver will make the payment window come off, simulating the touch under the "filter" in the area of the key 45 for issuing the sale document in a totally automated way.

According to an embodiment, the plug & play driver of the present invention is in the form of an application program to be installed in the cash register system and/or in the automated payment system and which application is carried out by one and/or another of said systems by providing the functionalities according to one or more of the described embodiments.

The application program can be stored on mobile storage media such as CDrom, CDram, DVDrom, DVDram, pen drives, SD storage cards, PLash, microSD etc. or can be downloaded from remote servers.

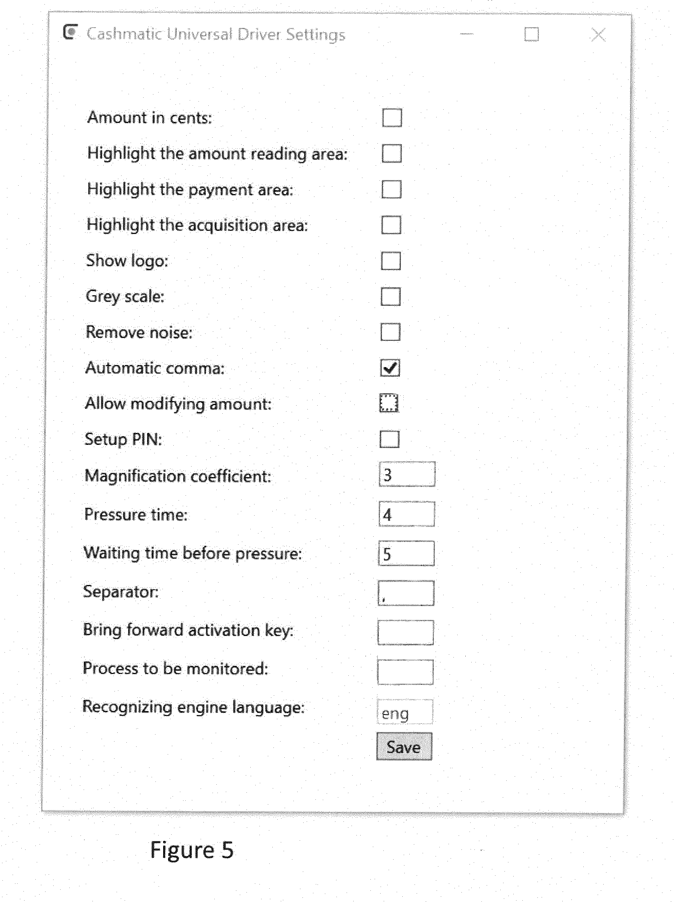

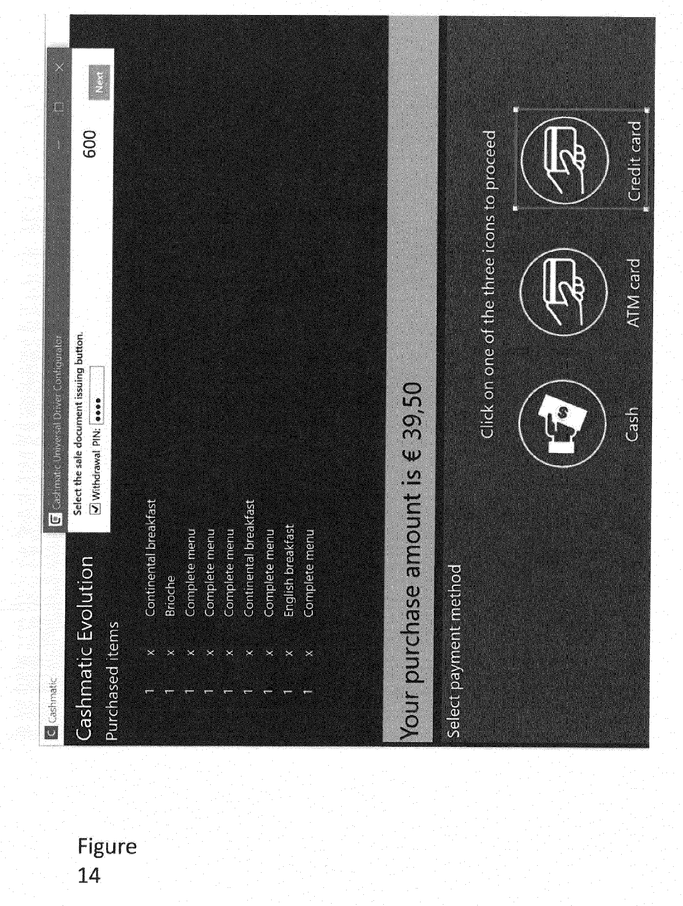

Referring to figures 5 to 20 these figures show an example of driver configurator according to the present invention for interfacing the digital type cash register with one or more transaction processing devices.

In the example of figures 5 to 20 the driver configuration is described according to the present invention for interfacing a cash register according to one or more of the embodiments afore described and that for example generates a command and data input interface such as or analogous to that of figure 4.

Figure 5 shows the configuration display of the configurator itself that allows activating different operative driver options.

Such choices will affect the driver configuration process in relation to the cash register software.

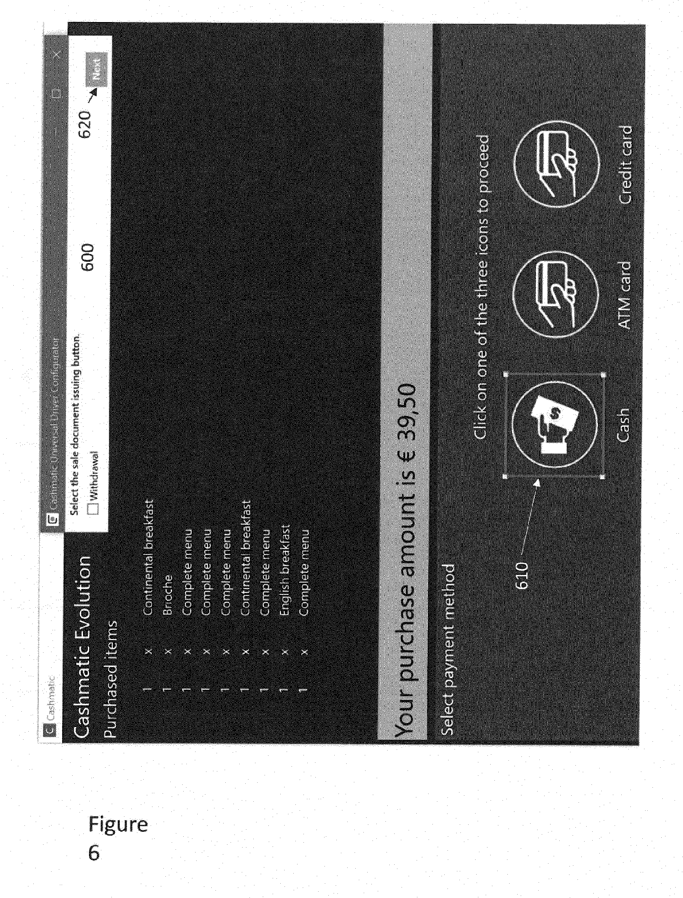

Figure 6 shows the first screen of the driver configuration step referring to the cash register software.

In the field 600 an instruction appears that the user has to follow for configuring. In this case the user is required to select an area corresponding to the graphic interface button of the cash register software that is related to the sale document issuing control.

A graphic selecting tool allows the area corresponding to the button for issuing the sale document to be defined in the form of selection box as denoted by 610.

In the example the selected area is the one related to cash payment.

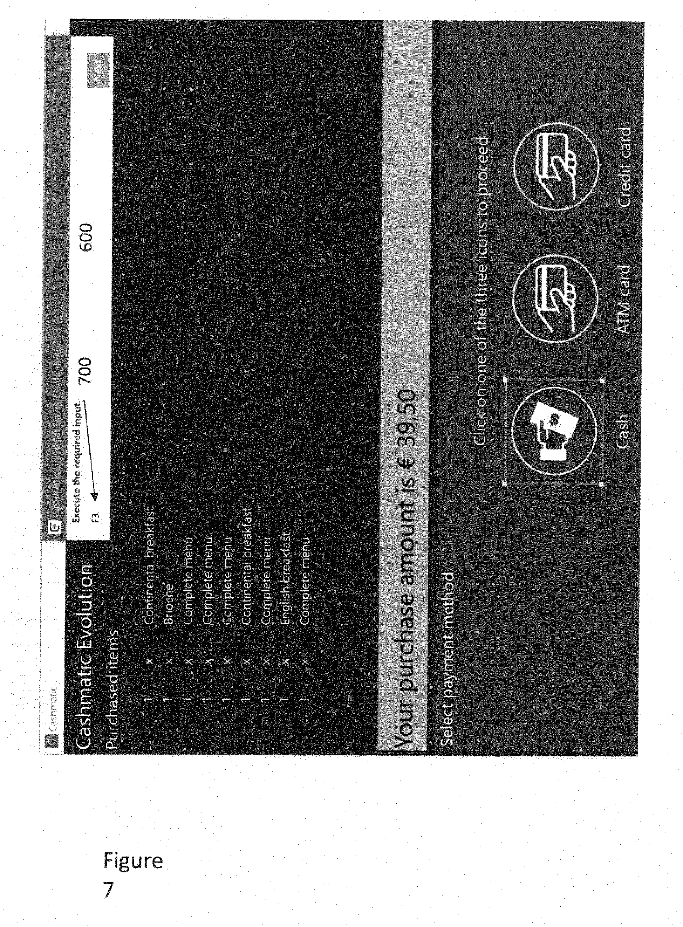

By clicking on the "Next" button 620 the screen of figure 7 is accessed, wherein the area 600 shows the requirement to indicate an equivalent control, such as for example a function key or a combination of keys.

The function key F3 denoted by the arrow 700 has been selected as command here.

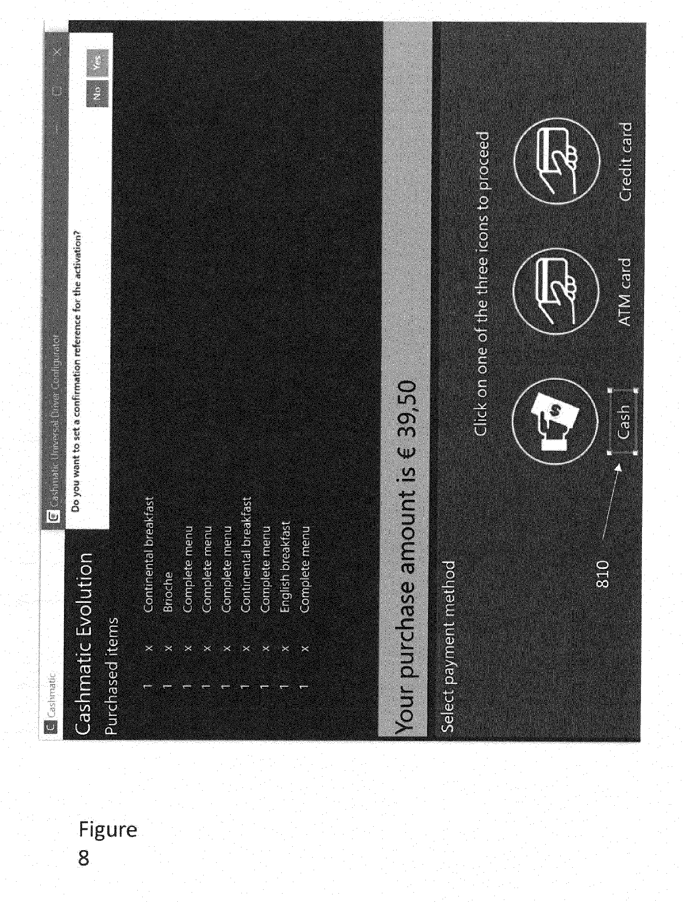

The screen of figure 8 provides the requirement of the option related to the validation reference for the key activation that can be activated or not activated by clicking on the yes key or the no key.

In the specific case, as confirmation command the area 810 has been selected that defines the cash item on the graphic interface display of the cash register.

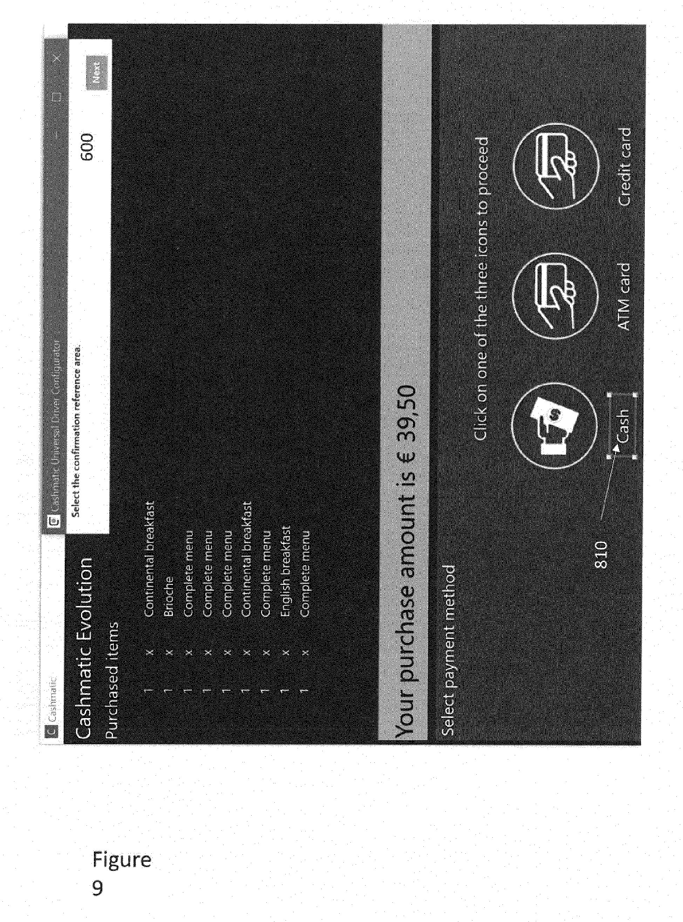

In the screen of figure 9 the selection command is executed as shown in the area 600.

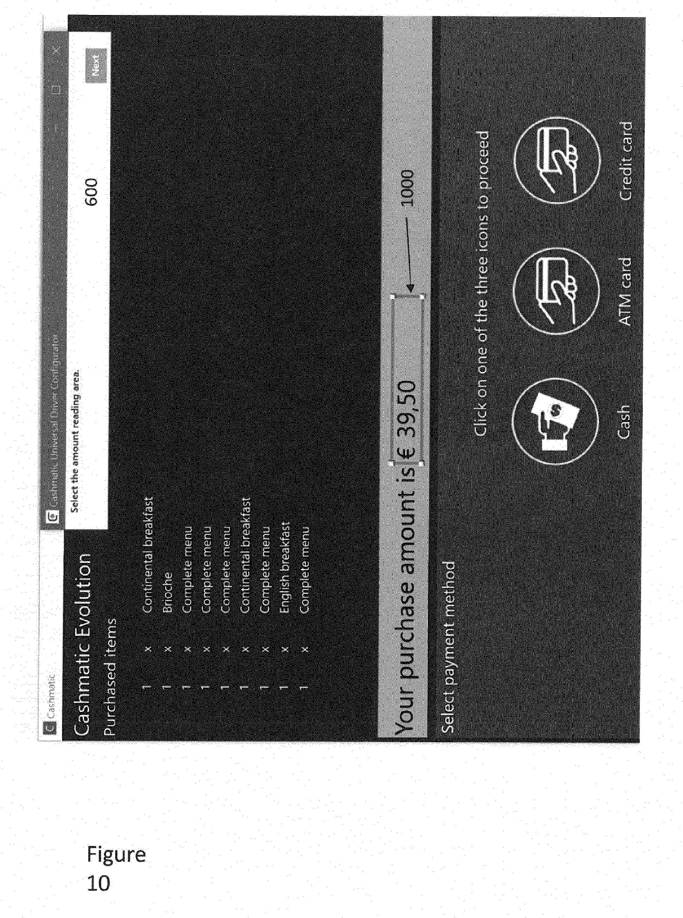

The screen of figure 10 shows instead the configuration step, wherein in the area 600 the user is required to select a display area wherein the displayed graphic interface of the cash register shows the amount related data.

By the selecting means used to select the area of the button in figure 6, the interface area wherein the cash register program displays the transaction amount can be selected. As denoted by the arrow 1000.

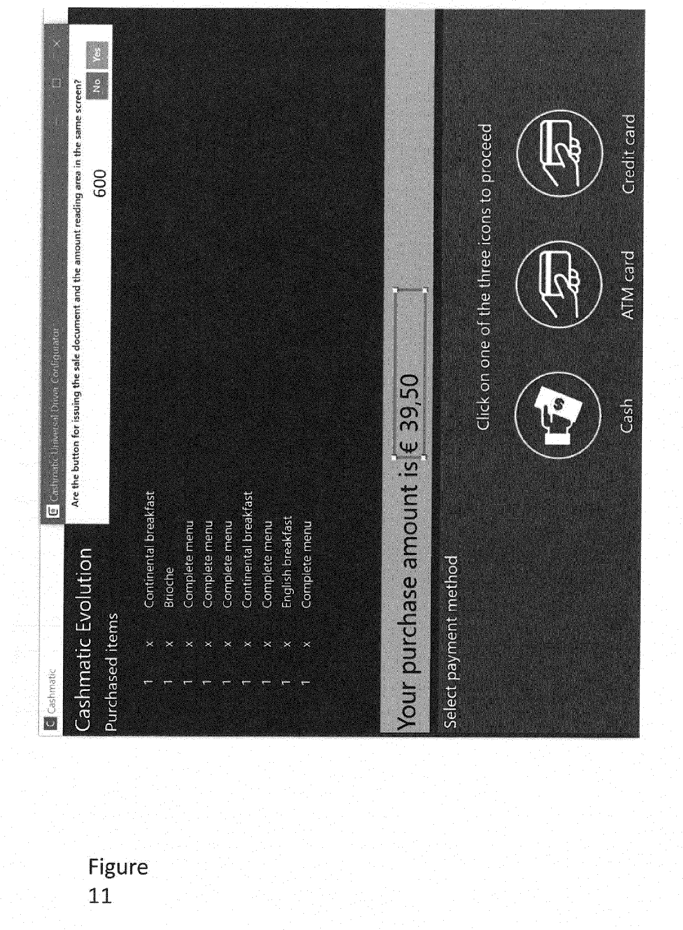

In the screen of figure 11 the driver configurator requires whether the sale document issuing key and the amount are on two different screens. The requirement appears in the area 600 and a button for the affirmative answer and one for the negative answer denoted by YES and NO are provided.

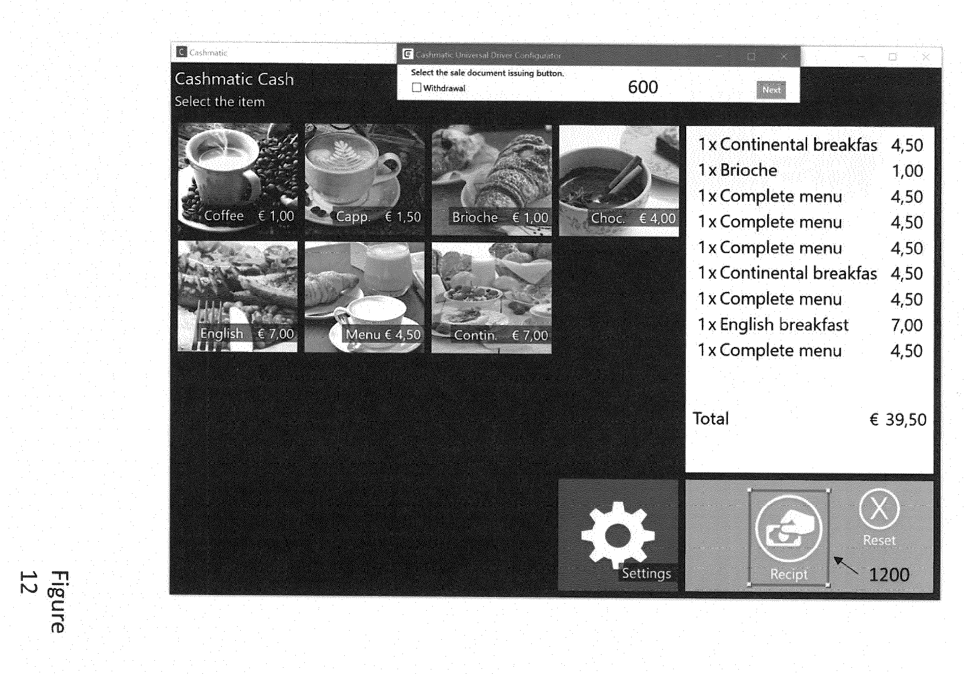

In figure 12 the interface screen of the cash register program is depicted, wherein the selection of a confirmation button for confirming the amount acquisition, i.e. the actual transaction, is provided.

In this example the button for issuing the receipt denoted by 1200 is selected as button for the actual transaction i.e. for the acquisition of the amount to be paid.

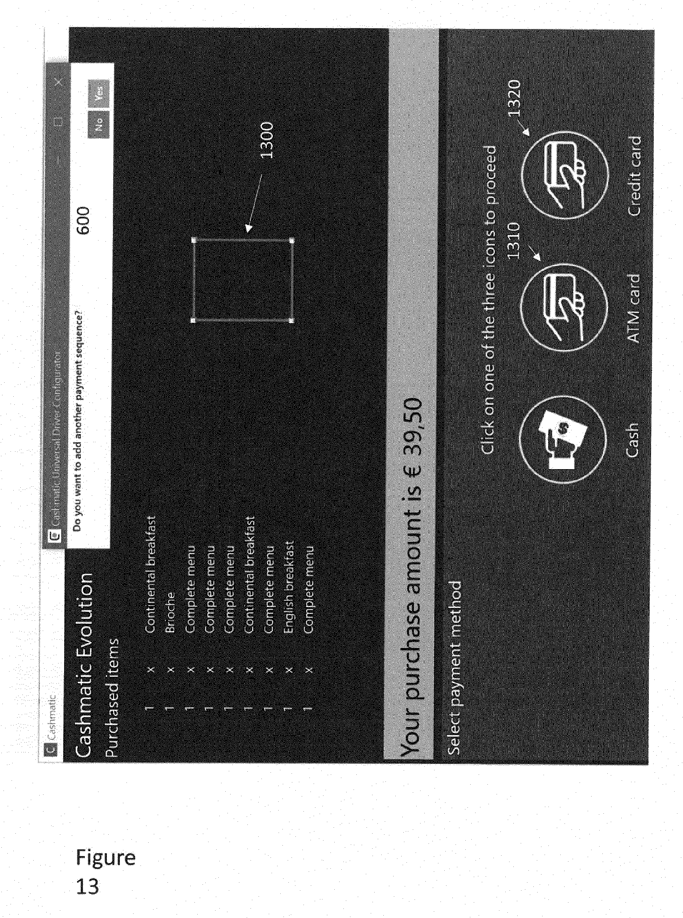

As the screen of figure 13 shows, the above steps can be repeated for different types of payment process. In the area 600 the requirement to indicate whether an additional and different sequence of payment steps for a different payment process is desired appears. The methodology is essentially corresponding to that of the above described steps for the cash payment and in the screen a selection box denoted by 1300 can be seen that can be matched for example with the area related to the ATM card or credit card payment button denoted by 1310 and 1320.

The screen 14 shows the selection of the button related to the payment by credit card whereas in the area 600 the condition is indicated for the issuing of the payment confirmation that is identified by the requirement to the user and the following PIN code input by the user as acquisition confirmation before the receipt issuing.

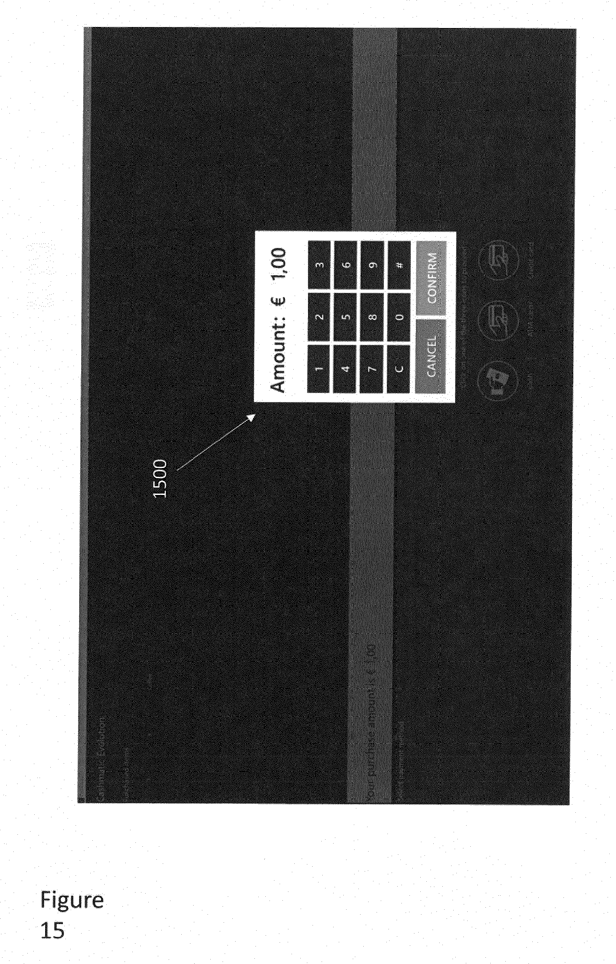

The screen of figure 15 shows the PIN code input interface in the form of a keypad 1500 and the input code delete or confirm keys.

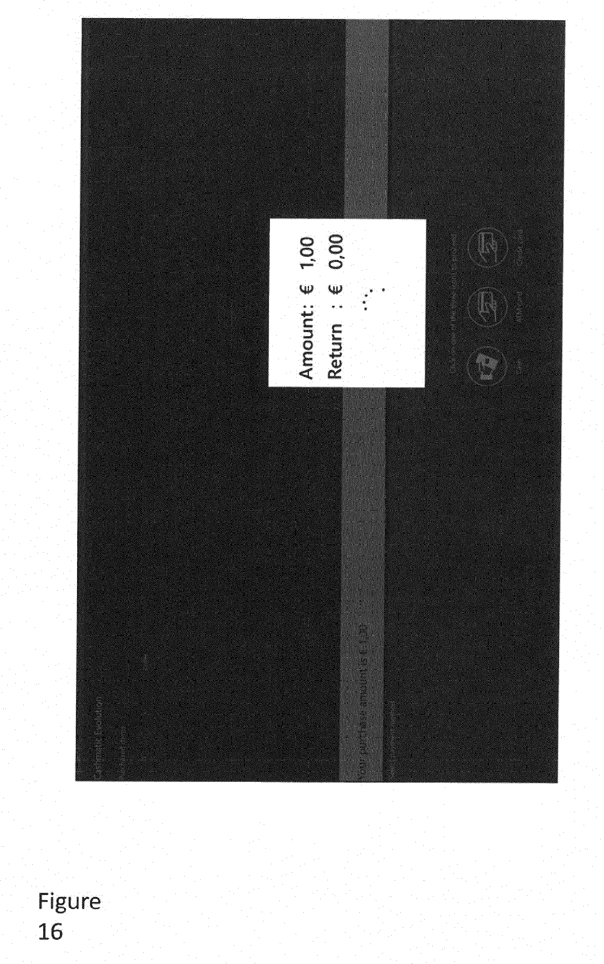

The screen of figure 16 shows the return procedure configuration interface. Here the amount to be paid was 1.00 euros and has been paid, therefore the return is 0.00 euros.

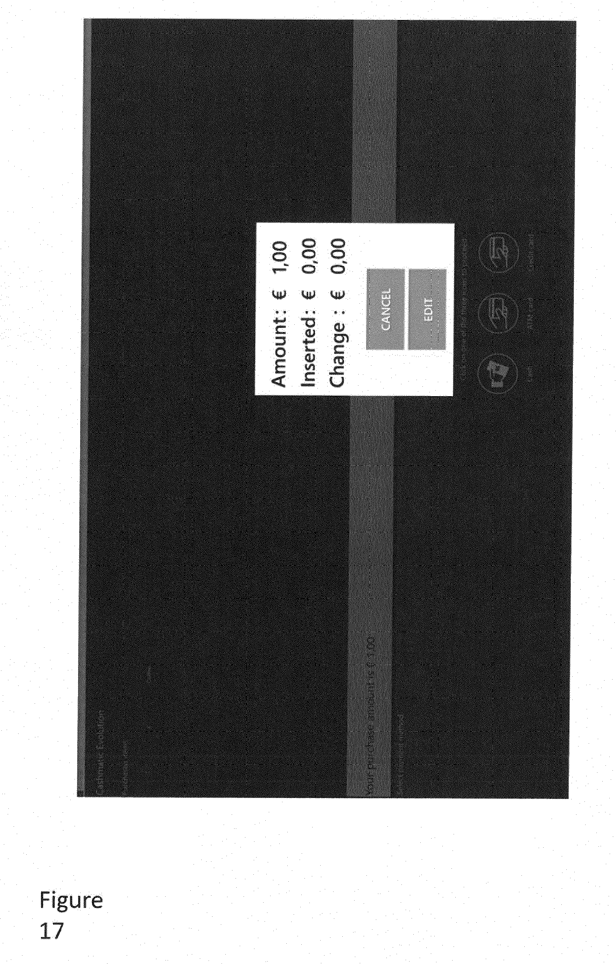

In the screens of figures 17 to 20 the change delivery mode is shown instead.

In the screen of figure 17 no payment has yet occurred, thereby both the input amount and the change amount are denoted by 0.00 euros.

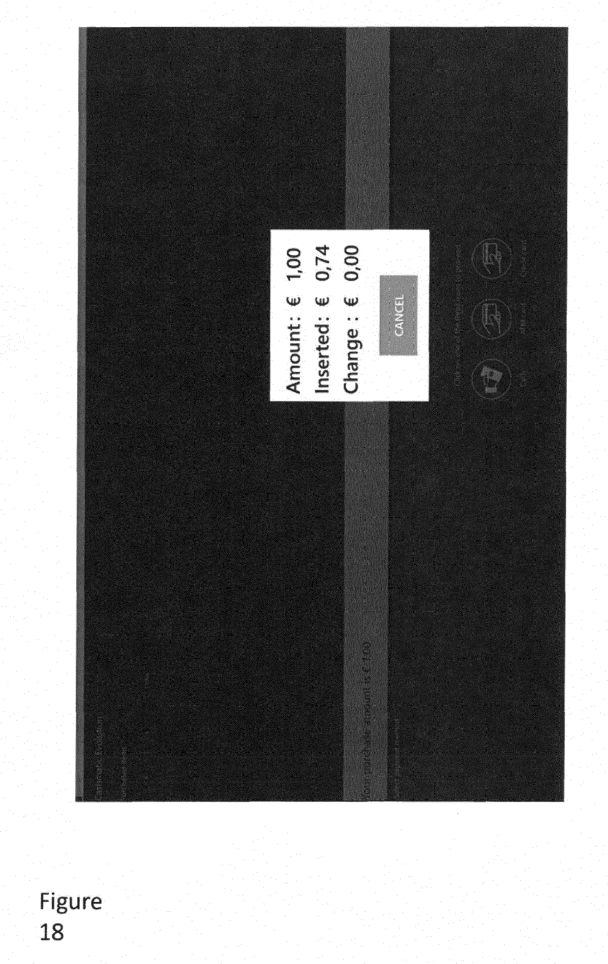

In the screen of figure 18, the amount paid is 0.50 only, thereby the change amount is 0.00.

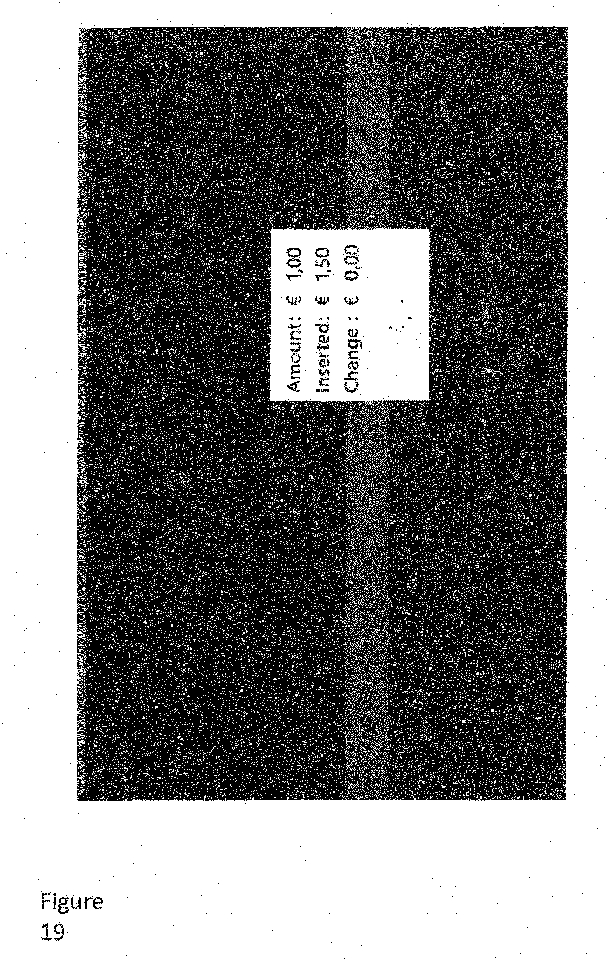

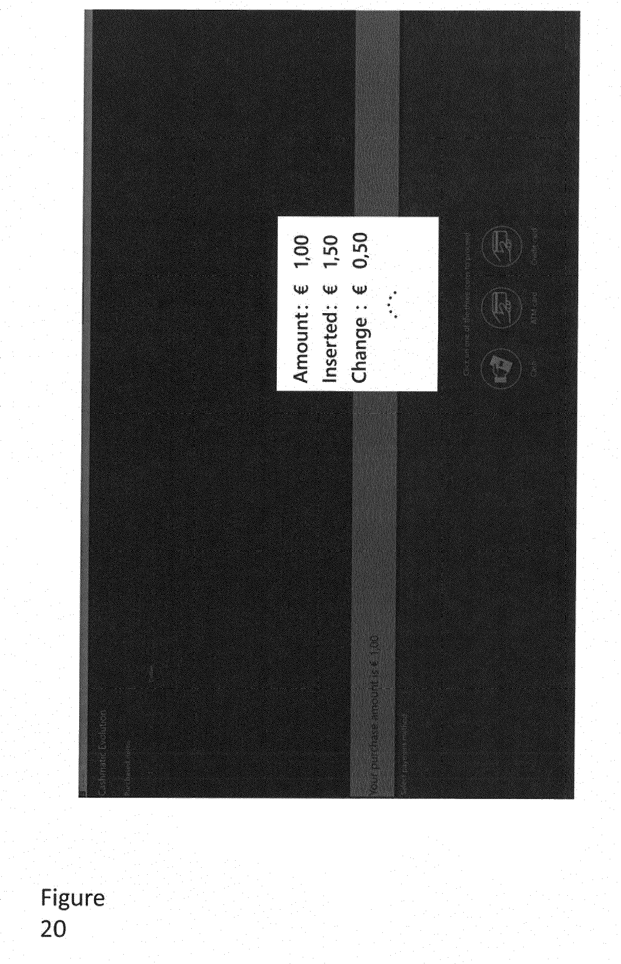

In the screen of figures 19 and 20 a value equal to 1.50 euros is input that is larger than the amount to be paid, thereby as shown in figure 20 the driver automatically calculates the change of 0.50 euros.

It is apparent how the driver takes control of the payment management and, only after the same has been completed, it transfers again the control to the cash register software for issuing the proof of purchase or sale.

## Claims

1. Plug and play driver (11) for interfacing a cash register system (10) with an automated payment system (12) in combination with a cash register, **characterized by** comprising
at least one unit configured for identifying, selecting and reading at least one data related to an overall amount to be paid calculated by the cash register;
at least one unit configured for identifying, selecting and taking control of at least one control key of the cash register;
at least one unit for identifying, selecting and acquiring a signal validating the payment of an amount generated by an automated payment system;
at least one redirecting unit to redirect the signal for driving the control key to the automated payment system for controlling the said automated payment system and inhibiting the related command to the cash register;
and which driver formats the data related to the overall amount into the expected format in the automated payment system and provides it to the same one and formats the signal for driving the control key into a command signal for driving the automated payment system, whereas it formats the signal validating the payment of the said overall amount generated by the automated payment system at the end of the transaction into a signal for commanding the cash register to carry out an expected function of the control key and provides the said signal directly, or upon user control, to said cash register for carrying out the said expected function,
said driver being in the form of an application program loadable and executable by the cash register and/or by the automated payment system;
and wherein said driver comprises a setup unit executing a program for selecting the data related to the said overall amount generated by the cash register system and of a display area of the said overall amount on a display and for selecting an input key of commands of the cash register to be used as the said control key of said automated payment system.

2. Plug and play driver for interfacing a cash register system with an automated payment system, according to claim 1,
cash register providing an interface for inputting identifiers of different typologies of items and for displaying said item typologies and the related costs, a processor for storing and adding the amounts of the said cost related to each identified item and a display for displaying at least the said overall amount being a sum of the said costs related to each identified item;
the automated payment system providing at least one economic transaction unit by at least a cash collection and/or by charging a payment card, which transaction unit is activated upon determining said overall amount calculated by the cash register,
said plug and play driver consisting of an interfacing unit for the interface between cash register software and automated payment system software said interface identifying a display area of the overall amount on said display and for reading said overall amount and identifying a command of at least one control key of said cash register,
said plug and play driver further comprising a communication interface for communicating to the automated payment system the said overall amount and an intercepting interface to intercept said command of said control key, for associating said command generated by said control key, at a first activation thereof, with a function for activating the automated payment system, immediately after the computation of said overall amount the transmission of the said overall amount to the automated payment system, and for re-addressing the command generated by said control key to the cash register system for carrying out a function provided by the control key of the cash register.

3. Plug and play driver according to claim 1 or 2, wherein the said control key of the cash register consists in a control key for issuing a receipt, the plug and play driver generating an interface communicating with the automated payment system which gives to said control key for issuing the receipt a first function for activating the automated payment system at the first activation of said control key and resets the command for issuing the receipt at a subsequent second activation of said control key.

4. Plug and play driver according to claim 1 wherein the said control key of the cash register is a control key for issuing a receipt and wherein a command for issuing a receipt by the cash register is automatically generated by the automated payment system at the end of the payment process and is directly transmitted to the cash register by the automated payment system by simulating an activation of the said control key for issuing the receipt.

5. Plug and Play driver according to claim 1 wherein the said plug and play driver has a selecting unit to select said display area of the overall amount, a section for capturing the image of the alphanumerical characters that are in said area and for recognizing said alphanumerical characters to generate the data related to the overall amount object of the payment, which data is input to the automated payment system as a value of the transaction to be carried out.

6. Plug and play driver according to claim 1 or 5, **characterized in that**
the said control key of the cash register is a control key for issuing a receipt;
and the said plug and play driver provides a unit for identifying and recognizing said control key for issuing the receipt, the interception of the command signal generated by said control key and the addressing of said command signal generated by said control key as a command signal for driving the automated payment system, whereas the command signal of the said control key for issuing the receipt is inhibited and replaced by an automated command generated by the plug and play driver on receipt of said signal validating the payment of the said overall amount..

7. Automated purchase system comprising
a cash register (10) and an automated payment system (12) wherein said cash register and said automated payment system are interfaced by a plug and play driver (11) according to one of the claims 1 to 6.

## Patentansprüche

1. Plug-and-Play-Treiber (11) zum Schnittstellen-Verbinden eines Registrierkassensystems (10) mit einem automatischen Zahlungssystem (12) in Kombination mit einer Registrierkasse, **dadurch gekennzeichnet, dass** er umfasst:
mindestens eine Einheit, die zum Identifizieren, Auswählen und Lesen von mindestens einem Datenelement konfiguriert ist, das sich auf einen von der Registrierkasse berechneten Gesamtbetrag bezieht;
mindestens eine Einheit, die zur Identifizierung, Auswahl und Kontrollübernahme von mindestens einer Steuerungstaste der Registrierkasse konfiguriert ist;
mindestens eine Einheit zum Identifizieren, Auswählen und Erfassen eines Signals, das die Zahlung eines von einem automatischen Zahlungssystem generierten Betrags validiert;
mindestens eine Umleitungseinheit zur Umleitung des Ansteuersignals der Steuerungstaste zum automatisierten Zahlungssystem, um das besagte automatisierte Zahlungssystem zu steuern und den entsprechenden Befehl an die Registrierkasse zu hemmen;
wobei der Treiber die auf den Gesamtbetrag bezogenen Daten in das erwartete Format im automatisierten Zahlungssystem formatiert und an diesen weiterleitet und das Signal zur Ansteuerung der Steuerungstaste in ein Befehlssignal zur Ansteuerung des automatisierten Zahlungssystems formatiert, wobei das Signal zur Validierung der Zahlung des vom automatischen Zahlungssystem am Ende der Transaktion erstellten Gesamtbetrags in ein Befehlssignal für die Registrierkasse formatiert wird, um eine erwartete Funktion der Steuerungstaste auszuführen, und dieses Signal direkt oder auf Anweisung des Benutzers an die Registrierkasse zur Ausführung der erwarteten Funktion geliefert wird,
wobei der Treiber in Form eines Anwendungsprogramms vorgesehen ist, das von der Registrierkasse und/oder dem automatischen Zahlungssystem ladbar und ausführbar ist;
und wobei der Treiber eine Einstelleinheit umfasst, die ein Programm ausführt zum Auswählen der sich auf den von dem Registrierkassensystem erzeugten Gesamtbetrag beziehenden Daten und eines Anzeigebereichs des Gesamtbetrags auf einer Anzeige sowie zum Auswählen einer als Steuerungstaste des automatischen Zahlungssystems zu verwendenden Befehlseingabetaste für die Registrierkasse.

2. Plug-and-Play-Treiber zum Schnittstellen-Verbinden eines Registrierkassensystems mit einem automatischen Zahlungssystem nach Anspruch 1,
wobei die Registrierkasse eine Schnittstelle zur Eingabe von Identifikatoren verschiedener Artikelarten und zur Anzeige der Artikelarten und der zugehörigen Preise, einen Prozessor zum Speichern und Summieren der Beträge der mit jedem identifizierten Artikel verbundenen Preise und eine Anzeige zum Anzeigen mindestens des Gesamtbetrags, der eine Summe der mit jedem identifizierten Artikel verbundenen Preise ist, aufweist;
das automatisierte Zahlungssystem mindestens eine Wirtschaftstransaktionseinheit durch mindestens einen Bargeldeinzug und/oder durch Belastung einer Zahlungskarte bereitstellt, wobei die Transaktionseinheit bei Bestimmung des von der Registrierkasse berechneten Gesamtbetrags aktiviert wird,
wobei der Plug-and-Play-Treiber aus einer Schnittstelleneinheit zur Herstellung einer Schnittstellenverbindung zwischen der Registrierkassensoftware und der Software des automatisierten Zahlungssystems besteht, wobei die Schnittstelle einen Anzeigebereich des Gesamtbetrags auf dem Display identifiziert und zum Lesen des Gesamtbetrags und Identifizieren eines Befehls von mindestens einer Steuerungstaste der Registrierkasse vorgesehen ist,
wobei der Plug-and-Play-Treiber ferner eine Kommunikationsschnittstelle für die Kommunikation des Gesamtbetrags an das automatische Zahlungssystem und eine Abfangschnittstelle zum Abfangen des Befehls der Steuerungstaste umfasst, um den von der Steuerungstaste erzeugten Befehl bei seiner ersten Aktivierung mit einer Funktion zur Aktivierung des automatisierten Zahlungssystems zuzuordnen, und zwar unmittelbar nach der Berechnung des besagten Gesamtbetrags und der Übertragung des besagten Gesamtbetrags an das automatisierte Zahlungssystem, und um den von der Steuerungstaste erzeugten Befehl erneut an das Registrierkassensystem zu adressieren, um eine von der Steuerungstaste der Registrierkasse bereitgestellte Funktion auszuführen.

3. Plug-and-Play-Treiber nach Anspruch 1 oder 2, wobei die besagte Steuerungstaste der Registrierkasse aus einer Steuerungstaste für die Ausgabe einer Quittung besteht, wobei der Plug-and-Play-Treiber eine mit dem automatisierten Zahlungssystem kommunizierende Schnittstelle bildet, die der besagten Steuerungstaste für die Ausgabe der Quittung eine erste Funktion für die Aktivierung des automatisierten Zahlungssystems bei der ersten Aktivierung der besagten Steuerungstaste verleiht und den Befehl für die Ausgabe der Quittung bei einer nachfolgenden zweiten Aktivierung der besagten Steuerungstaste zurücksetzt.

4. Plug-and-Play-Treiber nach Anspruch 1, wobei die Steuerungstaste der Registrierkasse eine Steuerungstaste zur Ausgabe einer Quittung ist und wobei ein Befehl zur Ausgabe einer Quittung durch die Registrierkasse automatisch durch das automatisierte Zahlungssystem am Ende des Zahlungsvorgangs erstellt wird und unmittelbar durch das automatisierte Zahlungssystem an die Registrierkasse durch Simulation einer Aktivierung der Steuerungstaste zur Ausgabe der Quittung übertragen wird.

5. Plug-and-Play-Treiber nach Anspruch 1, wobei der Plug-and-Play-Treiber eine Auswahleinheit zum Auswählen des Anzeigebereichs des Gesamtbetrags, einen Abschnitt zum Aufnehmen des Bildes der sich in diesem Bereich befindenden alphanumerischen Zeichen und zum Erkennen der alphanumerischen Zeichen aufweist, um die auf das Gesamtbetragsobjekt der Zahlung bezogenen Daten zu erzeugen, wobei diese Daten in das automatisierte Zahlungssystem als ein Wert der auszuführenden Transaktion eingegeben werden.

6. Plug-and-Play-Treiber nach Anspruch 1 oder 5, **dadurch gekennzeichnet, dass** die Steuerungstaste der Registrierkasse eine Steuerungstaste zum Ausgeben einer Quittung ist;
und der Plug-and-Play-Treiber eine Einheit zum Identifizieren und Erkennen der Steuerungstaste zum Ausgeben der Quittung, zum Abfangen des von der Steuerungstaste erzeugten Befehlssignals und zum Adressieren des von der Steuerungstaste erzeugten Befehlssignals als ein Befehlssignal zum Ansteuern des automatisierten Zahlungssystems bereitstellt, während das Befehlssignal der Steuerungstaste zum Ausgeben der Quittung gehemmt und durch einen automatisierten Befehl ersetzt wird, der von dem Plug-and-Play-Treiber bei Empfang des die Zahlung des Gesamtbetrags validierenden Signals erzeugt wird.

7. Automatisiertes Einkaufssystem mit einer Registrierkasse (10) und einem automatisierten Zahlungssystem (12), wobei die Registrierkasse und das automatisierte Zahlungssystem mittels Schnittstelle durch einen Plug-and-Play-Treiber (11) nach einem der Ansprüche 1 bis 6 verbunden sind.

## Revendications

1. Pilote plug and play (11) pour interfacer un système de caisse enregistreuse (10) avec un système de paiement automatisé (12) associé à une caisse enregistreuse, **caractérisé en ce qu'**il comprend
au moins une unité configurée pour identifier, sélectionner et lire au moins une donnée relative à un montant total à payer et calculé par la caisse enregistreuse;
au moins une unité configurée pour identifier, sélectionner et prendre le contrôle au moins une touche de commande de la caisse enregistreuse;
au moins une unité pour identifier, sélectionner et acquérir un signal validant le paiement du montant généré par le système de paiement automatisé;
au moins une unité de redirection pour rediriger le signal d'activation de la touche de commande vers le système de paiement automatisé, de sorte à commander ledit système de paiement automatisé et à inhiber la commande relative à la caisse enregistreuse;
et lequel pilote formate les données relatives au montant total selon le format prévu dans le système de paiement automatisé et les transmet au même, et formate le signal d'activation de la touche de commande en un signal de commande qui active le système de paiement automatisé, tandis qu'il formate le signal validant le paiement dudit montant total généré par le système de paiement automatisé à la fin de la transaction en un signal de commande qui commande la caisse enregistreuse à effectuer une fonction prévue de la touche de commande et qui transmet ledit signal directement, ou sur commande de l'utilisateur, à ladite caisse enregistreuse pour effectuer ladite fonction prévue,
ledit pilote étant sous la forme d'un programme applicatif qui peut être chargé et exécuté par la caisse enregistreuse et/ou par le système de paiement automatisé;
et dans lequel ledit pilote comprend une unité de configuration exécutant un programme pour sélectionner les données relatives audit montant total généré par le système de caisse enregistreuse et d'une zone d'affichage dudit montant total sur un écran et pour sélectionner une touche d'entrée de commandes de la caisse enregistreuse à utiliser comme ladite touche de commande dudit système de paiement automatisé.

2. Pilote plug and play pour interfacer un système de caisse enregistreuse avec un système de paiement automatisé selon la revendication 1,
la caisse enregistreuse fournissant une interface pour saisir des identifiants de différentes typologies d'articles et pour afficher lesdites typologies d'articles et les coûts relatifs, un processeur pour mémoriser et additionner les montants dudit coût relatif à chaque article identifié et un écran pour afficher au moins ledit montant total, le montant étant la somme desdits coûts relatifs à chaque article identifié;
le système de paiement automatisé fournissant au moins une unité de transaction économique par au moins un encaissement d'espèces et/ou à travers une carte de paiement, laquelle unité de transaction est activée lors de la détermination dudit montant total calculé par la caisse enregistreuse,
ledit pilote plug and play étant constitué d'une unité d'interface entre un logiciel de caisse enregistreuse et un logiciel de système de paiement automatisé, ladite interface identifiant une zone d'affichage pour afficher le montant total sur ledit écran et pour lire ledit montant total et identifier une commande d'au moins une touche de commande de ladite caisse enregistreuse,
ledit pilote plug and play comprenant en outre une interface de communication pour communiquer ledit montant total au système de paiement automatisé, et une interface d'interception pour intercepter ladite commande de ladite touche de commande, pour associer ladite commande générée par ladite touche de commande, dès la première activation de la même, à une fonction pour activer le système de paiement automatisé, immédiatement après le calcul dudit montant total la transmission dudit montant total au système de paiement automatisé, et pour réadresser la commande générée par ladite touche de commande au système de caisse enregistreuse, pour effectuer une fonction fournie par la touche de commande de la caisse enregistreuse.

3. Pilote plug and play selon la revendication 1 ou 2, dans lequel ladite touche de commande de la caisse enregistreuse consiste en une touche de commande pour l'émission d'un ticket de caisse, le pilote plug and play générant une interface de communication avec le système de paiement automatisé qui attribue à ladite touche de commande pour l'émission du ticket de caisse une première fonction pour activer le système de paiement automatisé dès la première activation de ladite touche de commande et qui réinitialise la commande pour émettre le ticket de caisse lors d'une seconde activation de ladite touche de commande.

4. Pilote plug and play selon la revendication 1, dans lequel ladite touche de commande de la caisse enregistreuse est une touche de commande pour l'émission d'un ticket de caisse et dans lequel une commande pour l'émission d'un ticket de caisse par la caisse enregistreuse est automatiquement générée par le système de paiement automatisé dès la fin du processus de paiement et est directement transmise à la caisse enregistreuse par le système de paiement automatisé, en simulant une activation de ladite touche de commande pour l'émission d'un ticket de caisse.

5. Pilote plug and play selon la revendication 1, dans lequel ledit pilote plug and play a une unité de sélection pour sélectionner ladite zone d'affichage du montant total, une section pour capturer l'image des caractères alphanumériques qui se trouvent dans ladite zone et pour reconnaître lesdits caractères alphanumériques pour générer les données relatives au montant total objet du paiement, lesquelles données sont entrées dans le système de paiement automatisé en tant que valeur de la transaction à effectuer.

6. Pilote plug and play selon la revendication 1 ou 5, **caractérisé en ce que**
ladite touche de commande de la caisse enregistreuse est une touche de commande pour l'émission d'un ticket de caisse;
et ledit pilot plug and play est muni d'une unité pour identifier et reconnaître ladite touche de commande pour l'émission du ticket de caisse, pour intercepter le signal de commande généré par ladite touche de commande et pour adresser ledit signal de commande généré par ladite touche de commande en tant que signal de commande qui active le système de paiement automatisé, tandis que le signal de commande de ladite touche de commande pour l'émission du ticket de caisse est inhibé et remplacé par une commande automatisée générée par le pilote plug and play dès la réception dudit signal validant le paiement dudit montant total.

7. Système d'achat automatisé comprenant une caisse enregistreuse (10) et un système de paiement automatisé (12)
dans lequel ladite caisse enregistreuse et ledit système de paiement automatisé sont interfacés par un pilote plug and play (11) selon l'une des revendications 1 à 6.
